# EUROPEAN PATENT SPECIFICATION

(11) **EP 2 964 024 B1**
(45) Date of publication and mention of the grant of the patent: **11.10.2017**
(21) Application number: 14712817.7
(22) Date of filing: 27.02.2014
(51) Int. Cl.: C05F 11/00, A01N 43/08, A01P 21/00

(54) **METHODS FOR TREATING FLOWERING PLANTS WITH RIBOSE**
VERFAHREN ZUR BEHANDLUNG VON BLÜTENPFLANZEN MIT RIBOSE
PROCÉDÉS POUR LE TRAITEMENT DE PLANTES À FLEURS AVEC DU RIBOSE

(30) Priority: 08.03.2013 US 201361775109 P; 15.01.2014 US 201461927622 P
(43) Date of publication of application: 13.01.2016
(73) Proprietor: RiboCor, Inc., Minneapolis, MN 55428 (US)
(72) Inventor: GRUETT, Stacey, E., Elk River, MN 55330 (US)
(74) Representative: Lucas, Phillip Brian
(86) International application number: PCT/US2014/018874
(87) International publication number: WO 2014/137718

(56) References cited:
- US-A1- 2003 217 577

## Description

This invention relates to a method of stimulating blooming of a flowering plant. It also provides a method of regulating stem elongation and/or promoting branching (lateral growth) of a plant.

Plants undergo periods of physiological stress that may have adverse effects on the plants. Such stress periods may be due to normal events such as flowering where the demand for carbohydrates increases and places a demand on the root system of the plant, causing the roots to be depleted of their normal concentration of carbohydrates. Climate may also play a part in stress. For example, if sunlight is below normal during the growing season and photosynthesis is thereby diminished, the plants may have to draw upon their reserves to sustain flowering, flower setting or fruit setting and maturation. Pathogens such as for example verticillium and fusarium, nematodes, etc. or pests such as mites and aphids may also create stress. For example, verticillium and fusarium tend to plug the vascular tissue of plants, thereby preventing absorption of water and resulting in wilting.

Compositions and methods for stimulating the growth of plants are known. Exemplary such compositions can include an energy component, a micronutrient component, and a macronutrient component. The energy component typically includes a sugar or a mixture of sugars. The micronutrient component typically provides zinc, iron, and manganese, and preferably also copper, boron, molybdenum, and cobalt. The macronutrient component typically provides the elements nitrogen, phosphorus, potassium, and calcium, and preferably also magnesium and sulfur. It has been postulated that the macronutrients are essential to plant nutrition and growth, to flowering, to flower setting, to fruit setting, and to maturation. See, for example, U.S. Patent No. 6,874,277 (Yamashita).

Compositions including D-ribose have been used in methods for supplementing the soil/diet of plants in order to enhance plant growth, yield, hardening, as well as the recovery of plants which undergo transplantation. D-ribose has been used alone, or in combination with other carbohydrates, electrolytes, minerals, enzymes, micronutrients, macronutrients, or other ingredients to enhance plant growth, yield, hardening, and aid in the recovery during and following transplantation. See, for example, U.S. Patent Application Pub. No. 2003/0217577 A1 (Seifert et al).

However, there remains a need for methods of improving the blooming of flowering plants.

This invention provides a method of stimulating blooming of a flowering plant, i.e. a plant capable of bearing flowers, the method comprising: selecting a flowering plant that is not disposed for blooming; and watering the flowering plant with a solution comprising D-ribose.

The above method may include the steps of feeding the flowing plant with a plant food; and discontinuing feeding the flowering plant with the plant food; prior to watering the flowering plant with a solution comprising D-ribose.

The solution comprising D-ribose may comprise 50 mg to 20 grams of D-ribose to one US gallon (3.79 litres) of water, preferably 500 mg to 10 grams of D-ribose to one US gallon (3.79 litres) of water, and more preferably 3 grams to 7 grams of D-ribose to one US gallon (3.79 litres) of water. It may be substantially free of additional plant food and thus may consist (essentially) of water and D-ribose.

The flowering plant may be watered with the solution comprising D-ribose a plurality of times during a period for which blooming is desired, e.g. twice per day, daily, weekly, twice weekly, or monthly and watering may use sufficient solution comprising D-ribose to result in a moist growth medium. The solution comprising D-ribose may be applied to the plants and/or the growth medium in which the plants are growing.

The flowering plants may be potted plants e.g. potted house plants and they may be re selected from Orchids, Christmas Cactus, Palm, Mother's-in-law Tongue/Snake Plant, Rosemary, Bamboo, Pothos, Hibiscus, Jade, Purple Passion, Aloe vera, Schefflera, Cacti, and Norfolk Island Pine.

The invention also provides a method of regulating stem elongation and/or promoting branching (lateral growth) which comprises treating a plant according to a method as set out above.

As used herein:
- the phrase "flowering plant" is intended to mean any plant (including a seedling) that is capable of producing a flower under appropriate conditions;
- "blooming" is intended to mean a flowering plant under conditions wherein the plant is actually producing a flower;
- "stimulating blooming" is intended to mean creating conditions wherein a flowering plant is actually producing a flower;
- "comprises" and variations thereof do not have a limiting meaning where these terms appear in the description and claims;
- "a," "an," "the," "at least one," and "one or more" are used interchangeably; and

The present disclosure provides methods for treating a flowering plant. The methods include watering the flowering plant with a solution comprising D-ribose, either alone or with other ingredients such as plant food ingredients. In certain embodiments, the blooming of the flowering plant is stimulated.

In some embodiments, D-ribose may act as a plant growth regulator (PGR) when used to treat the plant. For example, plant growth regulators such as D-ribose can be applied to plants in commercial bedding plant production to manage growth in a way that enhances specific qualities of the plant. For example, in some embodiments, D-ribose can be used to treat a plant to reduce stem elongation and/or to increase branching. In some embodiments, the application of D-ribose to plants (e.g., flowering plants) can affect elongation, leaf coloration, and time to flower.

In one aspect, the present disclosure provides a method of treating a flowering plant. In one embodiment, the method includes watering the flowering plant with a solution including 50 mg to 20 grams of D-ribose to 3.79 L (one gallon) of water. In another aspect, the present disclosure provides a method of stimulating blooming of a flowering plant. The method of stimulating blooming of the flowering plant includes: selecting a flowering plant under conditions not disposed for blooming; and watering the flowering plant with a solution including D-ribose.

In another embodiment, the method of stimulating blooming of a flowering plant includes: feeding the flowering plant with a plant food; discontinuing feeding the flowering plant with the plant food; and subsequently watering the flowering plant with a solution including D-ribose.

In another embodiment, the method of stimulating blooming of a flowering plant includes: selecting a flowering plant under conditions not disposed for blooming; feeding the flowering plant with a plant food; discontinuing feeding the flowering plant with the plant food; and subsequently watering the flowering plant with a solution including D-ribose.

Flowering plants are plants that are capable of producing a flower under appropriate conditions. Flowering plants can be annuals or perrenials. Flowering plants can be grown outdoors or indoors. Flowering plants that can be grown outdoors include, for example, ornamental plants and crop plants (e.g., corn, soy beans, etc.), and can be potted or unspotted. Flowering plants that can be grown indoors include, for example, potted plants such as potted house plants.

A flowering plant will not necessarily bloom (i.e., actually produce flowers) continuously. For example, many plants only bloom seasonally or periodically. For another example, many plants will not bloom under the local climatic conditions. Also, flowering plants may not bloom when undergoing periods of physiological stress. Such stress periods may be due to normal events such as depletion of carbohydrates in the root system, changes in climate, amount of sunlight, or the presence of pathogens. Such conditions can result in a flowering plant that is not disposed for blooming.

Plant foods can include various combinations of ingredients including, for example, energy components, micronutrient components, and macronutrient components. Plant foods are available in liquid or solid form, with formulations varying based on the intended use. An exemplary plant food is available under the trade designation MIRACLE-GRO from The Scotts Company, LLC (Marysville, OH). Typical plant food can include exemplary ingredients such as nitrogen sources, phosphate, potash, boron, copper, iron, manganese, molybdenum, zinc, and ethylenediammetetraacetic acid (EDTA).

The methods disclosed herein include watering a flowering plant with a solution comprising D-ribose as described above. In some embodiments, the solution can optionally include other ingredients such as plant food ingredients. In other embodiments, the solution can optionally be substantially free of additional plant food. In certain embodiments, the solution of D-ribose consists of, or consists essentially of, water and D-ribose.

The solution of D-ribose can be applied to the flowering plants continuously or intermittently. When applied intermittently, the solution can be applied using any convenient schedule such as multiple times per day, daily, weekly, twice weekly, monthly, etc. The application of the solution of D-ribose can be continued during part or all of a period for which blooming is desired.

The amount of solution applied over a given period of time can depend on a number of factors including, for example, the type of flowering plant, the growing conditions (e.g., temperature, sunlight, humidity, exposure to wind, etc.), and the moisture content of the growth medium (e.g., soil, bark, compost, or other organic matter). Typically, sufficient solution is applied to result in a moist growth medium.

The solution of D-ribose can be applied to the flowering plants as desired. For example, the solution can be applied to the plant (e.g., the leaves of the plant) or directly to the growth medium in which the plants are growing.

The present invention is illustrated in the following non-limiting example.

### EXAMPLE 1

Plants treated with a solution of D-ribose in this example included Orchids, Christmas Cactus, Palm, Mother' s-in-law Tongue/Snake Plant, Rosemary, Bamboo, Pothos, Hibiscus, Jade, Purple Passion, Aloe vera, Schefflera, Cacti, and Norfolk Island Pine. The use of MIRACLE-GRO liquid plant food was stopped, then the use of a solution of D-ribose to treat the plants was started. Each week a fresh solution of D- ribose was made using 5 grams of D-ribose to 3.79 L (one gallon) of water. Sustained blooming in many of the flowering plants as well as unusual types of blooms on traditionally non-blooming plants were observed. Specific observations are noted below.

While all the plants were extremely healthy and grew exceptionally well, traditional flowering varieties performed amazingly well. Also two varieties that do not typically bloom in the Minnesota climate, developed blooms.

The first subject was an orchid which had not bloomed in six plus years. Upon treatment with the solution of D-ribose, it sparked two new stems full of blooms. The second subject was another orchid which had not bloomed in three plus years, and it showed the same results as subject one above.

Christmas Cactus typically only blooms around the Christmas and Easter holidays each year for a few weeks up to a month or so, then it stops blooming. However, upon treatment with the solution of D-ribose, this plant started to bloom early and sustained an abundance of continued blooms.

Hibiscus was taken inside in October for the winter months. Although it bloomed occasionally during the summer, the plant continuously bloomed upon starting treatment with the solution of D-ribose, even being indoors without the humidity and strong sun it typically prefers.

Palm is typically regarded as a non-flowering type of plant. This plant had not bloomed in approximately fifteen years. Upon treatment with the solution of D- ribose, it grew an unusual type of growth that appeared to be a flowering/seed mechanism on two different stems.

Snake Plant is another example of plant typically regarded as a non- flowering type plant. Upon treatment with the solution of D-ribose, it grew unusual growths that appeared to be some type of flowering appendage. It had not bloomed in over 15 years. While flowers on this plant are not unheard of, it is uncommon to bloom in the Minnesota climate and as an indoor plant.

In Purple Waffle the growth of four plants was observed over a 9 month period. One plant was not fed (control), but watered weekly. One plant was fed MIRACLE-GRO liquid plant food weekly based on product instructions of feeding every time you water by squeezing 10-20 drops into 0.95 L (1 quart) of water. One plant was fed IX (1.5 mg/ml) D-ribose weekly. One plant was fed 2X (3 mg/ml) D-ribose weekly. The length of the stems and the size of the leaves of the MIRACLE-GRO fed plant exhibited enhanced growth compared to the control. In contrast, the length of the stems and size of the leaves of the D-ribose fed plants exhibited similar or less growth than the control. However, the D-ribose fed plants exhibited increased branching compared to both the control and the MIRACLE-GRO fed plant.

## Claims

1. A method of stimulating blooming of a flowering plant, i.e. a plant capable of bearing flowers, the method comprising:
selecting a flowering plant that is not disposed for blooming; and
watering the flowering plant with a solution comprising D-ribose.

2. The method of claim 1, including the steps of feeding the flowering plant with a plant food and discontinuing feeding the flowering plant with the plant food prior to watering the flowering plant with a solution comprising D-ribose.

3. The method of claim 1 or 2, wherein the solution comprising D-ribose has any of the following compositions:
50 mg to 20 grams of D-ribose to one US gallon (3.79 litres) of water; 500 mg to 10 grams of D-ribose to one US gallon (3.79 litres) of water;
3 grams to 7 grams of D-ribose to one US gallon (3.79 litres) of water.

4. The method of any preceding claim, wherein the solution comprising D-ribose is substantially free of additional plant food.

5. The method of any preceding claim, wherein the solution comprising D-ribose consists essentially of water and D-ribose or consists of water and D-ribose.

6. The method of any preceding claim, wherein the flowering plant is watered with the solution comprising D-ribose a plurality of times during a period for which blooming is desired.

7. The method of any preceding claim, wherein the flowering plant is watered with the solution comprising D-ribose twice per day, daily, weekly, twice weekly, or monthly.

8. The method of any preceding claim, wherein the flowering plant is watered using sufficient solution comprising D-ribose to result in a moist growth medium.

9. The method of any preceding claim, wherein the solution comprising D-ribose is applied to the plants and/or the growth medium in which the plants are growing.

10. The method of any preceding claim, wherein the flowering plants are potted plants.

11. The method of any preceding claim, wherein the flowering plants are potted house plants

12. The method of any preceding claim, wherein the flowering plants are selected from the group consisting of Orchids, Christmas Cactus, Palm, Mother's-in-law Tongue/Snake Plant, Rosemary, Bamboo, Pothos, Hibiscus, Jade, Purple Passion, Aloe vera, Schefflera, Cacti, and Norfolk Island Pine.

13. A method of regulating stem elongation and/or promoting branching (lateral growth) which comprises treating a plant according to a method as set out in any preceding claim.

## Patentansprüche

1. Verfahren zum Stimulieren der Blüte von einer Blütenpflanze, d.h. von einer Pflanze, die in der Lage ist, Blüten zu tragen, wobei das Verfahren das Folgende umfasst:
Auswählen von einer Blütenpflanze, die nicht zur Blüte bereit ist; und
Wässern von der Blütenpflanze mit einer Lösung, die D-Ribose umfasst.

2. Verfahren nach Anspruch 1, umfassend die Schritte des Fütterns von der Blütenpflanze mit einer Pflanzennahrung und des Unterbrechens von dem Fütterns von der Blütenpflanze mit der Pflanzennahrung vor dem Wässern von der Blütenpflanze mit einer Lösung, die D-Ribose umfasst.

3. Verfahren nach Anspruch 1 oder 2, wobei die Lösung, die D-Ribose umfasst, irgendeine der folgenden Zusammensetzung aufweist:
50 mg bis 20 g D-Ribose auf eine US-Gallone (3,79 Liter) Wasser;
500 mg bis 10 g D-Ribose auf eine US-Gallone (3,79 Liter) Wasser;
3 g bis 7 g D-Ribose auf eine US-Gallone (3,79 Liter) Wasser.

4. Verfahren nach einem der vorhergehenden Ansprüche, wobei die Lösung, die D-Ribose umfasst, im Wesentlichen frei von zusätzlicher Pflanzennahrung ist.

5. Verfahren nach einem der vorhergehenden Ansprüche, wobei die Lösung, die D-Ribose umfasst, im Wesentlichen aus Wasser und D-Ribose besteht oder aus Wasser und D-Ribose besteht.

6. Verfahren nach einem der vorhergehenden Ansprüche, wobei die Blütenpflanze mit der Lösung, die D-Ribose umfasst, viele Male während eines Zeitraums gewässert wird, für den eine Blüte erwünscht ist.

7. Verfahren nach einem der vorhergehenden Ansprüche, wobei die Blütenpflanze mit der Lösung, die D-Ribose umfasst, zweimal pro Tag, täglich, wöchentlich, zweimal pro Woche oder monatlich gewässert wird.

8. Verfahren nach einem der vorhergehenden Ansprüche, wobei die Blütenpflanze unter Verwerdung von ausreichend Lösung, die D-Ribose umfasst, gewässert wird, um zu einem Feuchtwachstumsmedium zu führen.

9. Verfahren nach einem der vorhergehenden Ansprüche, wobei die Lösung, die D-Ribose umfasst, auf die Pflanzen und/oder auf das Wachstumsmedium, in dem die Pflanzen wachen, angewendet wird.

10. Verfahren nach einem der vorhergehenden Ansprüche, wobei die Blütenpflanzen Topfpflanzen sind.

11. Verfahren nach einem der vorhergehenden Ansprüche, wobei die Blütenpflanzen Zimmertopfpflanzen sind.

12. Verfahren nach einem der vorhergehenden Ansprüche, wobei die Blütenpflanzen aus der Gruppe ausgewählt sind, bestehend aus Orchideen, Weihnachtskaktus, Palme, Mother's in law tongue/Schlangenpflanze, Rosmarin, Bambus, Pothos, Hibiskus, Geldbaum, Samtpflanze (Englisch: Purple Passion), Aloe Vera, Schefflera, Kakteen und Zimmertanne.

13. Verfahren zum Regulieren der Stammverlängerung und/oder zum Fördern der Verzweigung (laterales Wachstum), umfassend das Behandeln von einer Pflanze gemäß einem Verfahren, wie es in einem der vorhergehenden Ansprüche dargelegt ist.

## Revendications

1. Procédé de stimulation de la floraison d'une plante à fleurs, c'est-à-dire une plante capable de porter des fleurs, le procédé comprenant :
la sélection d'une plante à fleurs qui n'est pas disposée à une floraison ; et
l'arrosage de la plante à fleurs avec une solution comprenant du D-ribose.

2. Procédé selon la revendication 1, comprenant les étapes d'alimentation de la plante à fleurs avec un aliment végétal et l'alimentation en discontinu de la plante à fleurs avec l'aliment végétal avant l'arrosage de la plante à fleurs avec une solution comprenant du D-ribose.

3. Procédé selon la revendication 1 ou 2, dans lequel la solution comprenant du D-ribose présente l'une quelconque des compositions suivantes :
50 mg à 20 grammes de D-ribose pour 3,79 litres (un gallon US) d'eau ;
500 mg à 10 grammes de D-ribose pour 3,79 litres (un gallon US) d'eau ;
3 grammes à 7 grammes de D-ribose pour 3,79 litres (un gallon US) d'eau.

4. Procédé selon une quelconque revendication précédente, dans lequel la solution comprenant du D-ribose est sensiblement dépourvue d'aliment végétal supplémentaire.

5. Procédé selon une quelconque revendication précédente, dans lequel la solution comprenant du D-ribose est constituée essentiellement d'eau et de D-ribose ou est constituée d'eau et de D-ribose.

6. Procédé selon une quelconque revendication précédente, dans lequel la plante à fleurs est arrosée avec la solution comprenant du D-ribose plusieurs fois pendant une période pendant laquelle une floraison est souhaitée.

7. Procédé selon une quelconque revendication précédente, dans lequel la plante à fleurs est arrosée avec la solution comprenant du D-ribose deux fois par jour, une fois par jour, une fois par semaine, deux fois par semaine ou une fois par mois.

8. Procédé selon une quelconque revendication précédente, dans lequel la plante à fleurs est arrosée en utilisant suffisamment de solution comprenant du D-ribose pour aboutir à un milieu de croissance humide.

9. Procédé selon une quelconque revendication précédente, dans lequel la solution comprenant du D-ribose est appliquée aux plantes et/ou au milieu de croissance dans lequel les plantes poussent.

10. Procédé selon une quelconque revendication précédente, dans lequel les plantes à fleurs sont des plantes en pot.

11. Procédé selon une quelconque revendication précédente, dans lequel les plantes à fleurs sont des plantes d'intérieur en pot.

12. Procédé selon une quelconque revendication précédente, dans lequel les plantes à fleurs sont choisies dans le groupe constitué des orchidées, du cactus de Noël, du palmier, de la sansevière/de la sansevière à trois bandes, du romarin, du bambou, du pothos, de l'hibiscus, de la plante de jade, de la passion pourpre, de l'aloe vera, du Scheffléra, des cactus et du pin de l'île de Norfolk.

13. Procédé de régulation de la montaison et/ou de favorisation de la branchaison (croissance latérale) qui comprend le traitement d'une plante selon un procédé tel qu'exposé dans une quelconque revendication précédente.
